(19) Europäisches Patentamt

European Patent Office

Office européen des brevets

(11) Veröffentlichungsnummer: **0 203 054**

**A2**

(12) **EUROPÄISCHE PATENTANMELDUNG**

(21) Anmeldenummer: **86890105.9**

(22) Anmeldetag: **15.04.86**

(51) Int. Cl.4: **B62M 1/02**

(30) Priorität: **18.04.85 AT 1168/85**

(43) Veröffentlichungstag der Anmeldung:
**26.11.86 Patentblatt 86/48**

(84) Benannte Vertragsstaaten:
**AT BE CH DE FR GB IT LI LU NL SE**

(71) Anmelder: **Jeannée, Wolfgang**
**Parkring 12a**
**A-1010 Wien(AT)**

(72) Erfinder: **Baumann, Ernst**
**Baumgasse 29-41/62/5**
**A-1030 Wien(AT)**

(74) Vertreter: **Hamburger, Walter A., Dipl.-Ing.**
**Postfach 96 Mahlerstrasse 9**
**A-1015 Wien(AT)**

(54) **Tretkurbelgetriebe.**

㉗ Mit einem Tretkurbelgetriebe, das wenigstens ein gegenüber der Kurbel (1) schwenkbar gelagertes, mit dieser federnd gekuppeltes Kettenrad (2) aufweist, sollen ungleichmäßige dynamische Kräfte so übertragen werden, daß ein Teil der auf die Kurbel (1) ausgeübten Spitzenkraft durch Anspannen von Federn (3) und (4) gespeichert wird, wobei sich das federnd gekuppelte Kettenrad (2) langsamer dreht als die Kurbel (1) und daß die gespeicherte Kraft durch Entspannung der Federn (3) und (4) von diesen abgegeben und auf das Kettenrad (2) übertragen wird, wobei sich das Kettenrad (2) - schneller dreht als die Kurbel (1).

Zu diesem Zweck sind Federpaare vorgesehen, von denen eine Feder (3) mittels eines Einspannorganes der Kurbel (1), die andere Feder (4) mittels eines Einspannorganes des Kettenrades (2) eingespannt ist.

Die eingespannten Federn (3) und (4) weisen auskragende Federschenkel auf, die sich beiderseits einer radial verlaufenden Symmetrieachse (9) befinden und im wesentlichen quer zur relativen Schwenkbewegung weisend direkt oder mittels wenigstens einer gegebenenfalls dazwischengeschalteten Beilage federnd aneinander abgestützt sind.

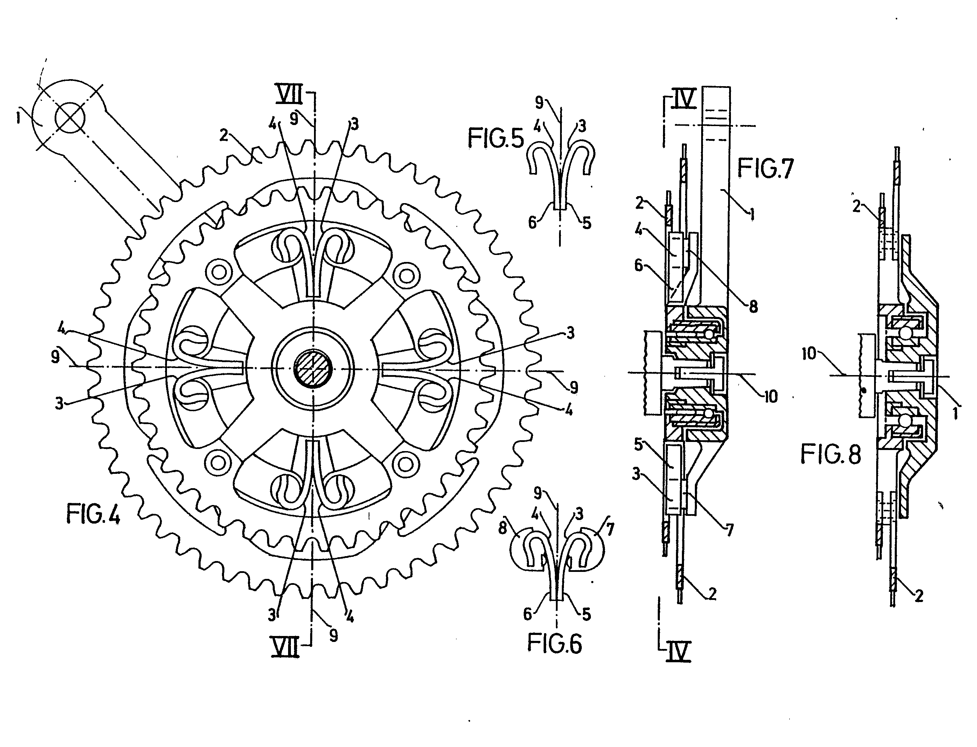

Zur Veröffentlichung mit der Zusammenfassung wird Fig. 4 vorgeschlagen.

FIG.4

# TRETKURBELGETRIEBE

Die Erfindung betrifft ein Tretkurbelgetriebe mit wenigstens einem gegenüber der Kurbel - schwenkbar gelagerten, mit dieser federnd gekuppelten Kettenrad.

Tretkurbelgetriebe mit Kettenrädern, die mit der Kurbel federnd gekuppelt sind, sind bekannt und vor allem in diversen Patentschriften veröffentlicht.

Die bekannten Tretkurbelgetriebe haben den Nachteil, daß die Kupplungen Kupplungsfedern aufweisen, die auf Grund ihrer Konstruktionsart groß dimensioniert sein müssen, damit die notwendige Federkraft erreicht wird.

Außerdem ist bei den bekannten, federnde Kupplungen aufweisenden Tretkurbelgetrieben der Verlauf der Energiespeicherung und -abgabe unbefriedigend.

Erfindungsgemäß werden diese Nachteile dadurch vermieden, daß die Kupplung Federpaare aufweist, von denen eine Feder mittels eines Einspannorganes der Kurbel, die andere Feder mittels eines Einspannorganes des Kettenrades eingespannt ist, die eingespannten Federn auskragende Federschenkel aufweisen, die sich beiderseits einer radial verlaufenden Symmetrieachse befinden und im wesentlichen quer zur relativen Schwenkbewegung weisend direkt oder mittels wenigstens einer gegebenenfalls dazwischengeschalteten Beilage federnd aneinander abgestützt sind.

Mit dem erfindungsgemäßen Tretkurbelgetriebe werden ungleichmäßige dynamische Kräfte so übertragen, daß ein Teil der auf die Kurbel ausgeübten Spitzenkraft durch Anspannen von Federn gespeichert wird, wobei sich das federnd gekuppelte Kettenrad langsamer dreht als die Kurbel und daß die ge speicherte Kraft durch Entspannung der Federn von diesen abgegeben und auf das Kettenrad übertragen wird, wobei sich das Kettenrad schneller dreht als die Kurbel.

Dadurch wird bei einem Tretkurbelgetriebe der sogenannte tote Punkt, beispielsweise bei im wesentlichen senkrechter Stellung der Kurbel eines Fahrrades, besser überbrückt.

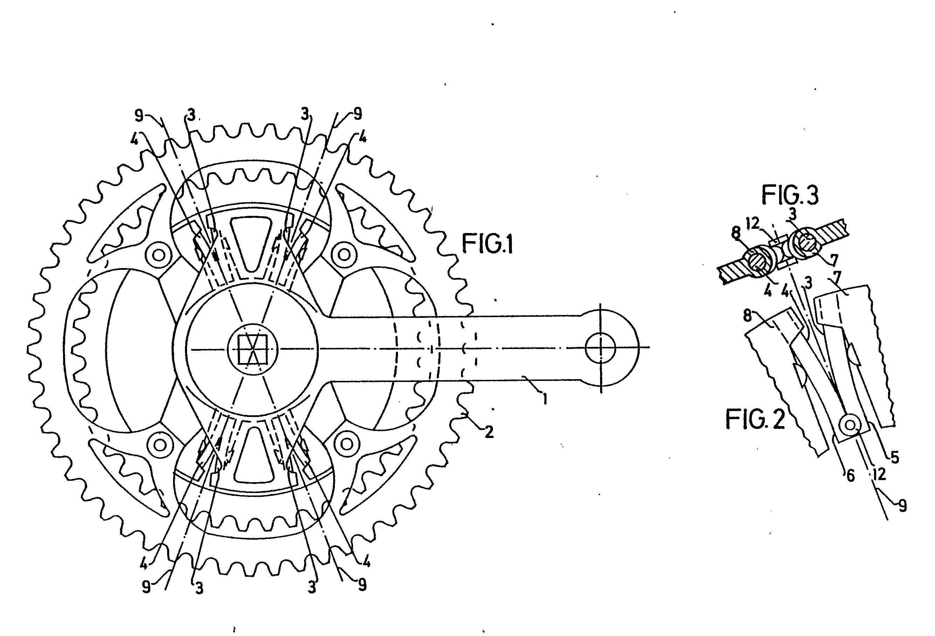

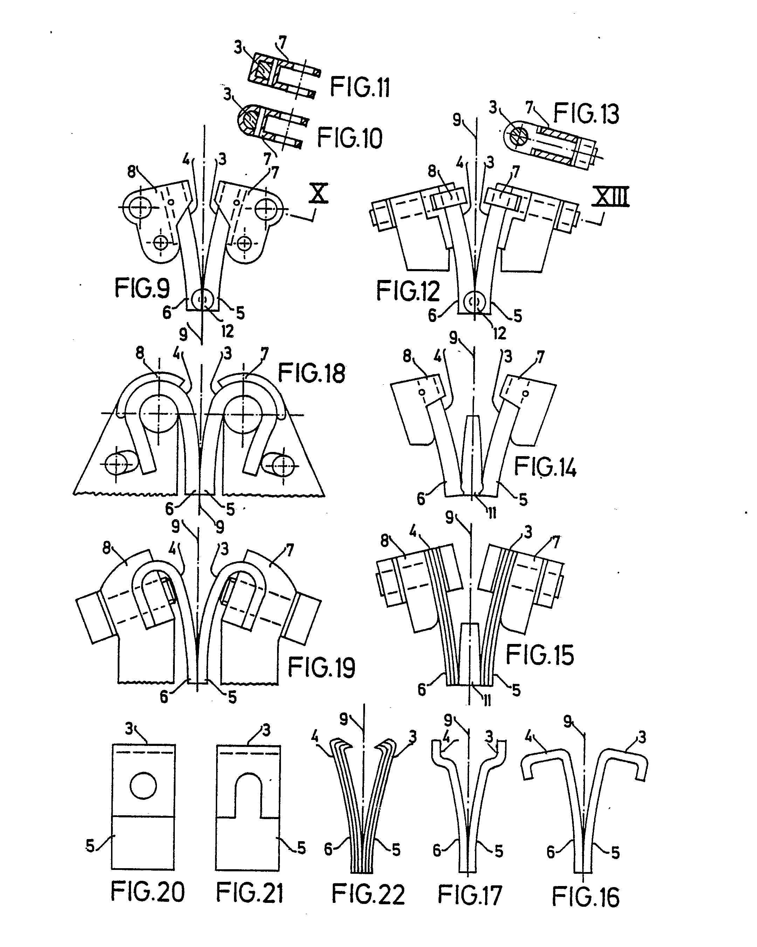

An Hand der Zeichnungen sind weitere Merkmale der Erfindung beschrieben. Fig. 1 zeigt in der Seitenansicht ein erfindungsgemäßes Tretkurbelgetriebe. Fig. 2 zeigt in der Seitenansicht ein Federpaar, das beim Getriebe gemäß Fig. 1 in vierfacher Anordnung integriert ist. Fig. 3 zeigt das Federpaar im Grundriß. Fig. 4 zeigt in der Seitenansicht ein Tretkurbelgetriebe, bei dem die Federpaare mit gleichem Abstand voneinander um die Schwenkachse herum situiert sind. Fig. 5 zeigt in der Seitenansicht ein Federpaar, das beim Ausführungsbeispiel gemäß Fig. 4 in vierfacher Anordnung integriert ist. Fig. 6 zeigt in der Seitenansicht ein mittels Einspannorganen eingespanntes Federpaar. Fig. 7 zeigt das Getriebe gemäß Fig. 4 im Axialschnitt VII-VII. Fig. 8 zeigt eine beispielsweise Getriebeausführung in einem Axialschnitt. Fig. 9 zeigt in der Seitenansicht eine Federpaaranordnung mit Einspannorganen, wobei die Einspannorgane einerseits zur Befestigung an einem Abstütz-bzw. Befestigungsorgan der Kurbel, andererseits zur Befestigung an einem Abstütz-bzw. Befestigungsorgan des Kettenrades ausgebildet sind. Fig. 10 zeigt eine mittels eines Einspannorganes eingespannte, einem runden Querschnitt aufweisende Feder im Schnitt X. Fig. 11 zeigt in einem ähnlichen Schnitt eine mittels eines Einspannorganes eingespannte Feder mit quadratischem Querschnitt. Fig. 12 zeigt in der Seitenansicht eine Federpaaranordnung, bei der die Einspannorgane zum Teil durch Klemmschrauben, Klemmanker oder dgl. gebildet sind. Fig. 13 zeigt eine mittels eines solchen Einspannorganes eingespannte Feder im Schnitt XIII. Fig. 14 zeigt in der Seitenansicht eine Federpaaranordnung mit zwischen den Federn eingeschalteter Beilage. Fig. 15 zeigt in der Seitenansicht eine Federpaaranordnung mit zwischen den Federn eingeschalteter Beilage, wobei die Federn aus mehreren Schichten bestehen. Fig. 16 zeigt in der Seitenansicht ein Federpaar mit im wesentlichen L-förmigen bzw. ansatzweise U-förmigen Federn. Fig. 17 zeigt in der Seitenansicht ein Federpaar mit im wesentlichen Z-förmigen Federn. Fig. 18 zeigt in der Seitenansicht eine Federpaaranordnung, bei der die mittels Einspannorganen eingespannten Federn im wesentlichen bügelförmig ausgebildet sind. Fig. 19 zeigt in der Seitenansicht eine Federpaaranordnung, bei der die im wesentlichen bügelförmig ausgebildeten Federn mittels Schrauben eingespannt sind. Fig. 20 zeigt in der Ansicht eine solche Feder mit einer zum Durchragen der Klemmschraube ausgebildeten Lochung. Fig. 21 zeigt in der Ansicht eine Feder mit einem zum Durchragen der Klemmschraube ausgebildeten Schlitz. Fig. 22 zeigt in der Seitenansicht ein Federpaar, bei dem die aus mehreren Schichten bestehenden Federn an den zur Einspannung mittels Einspannorganen bestimmten Enden umgebogen ausgebildet sind.

Gemäß den dargestellten Figuren ist mit 1 eine Kurbel des Tretkurbelgetriebes bezeichnet. Mit 2 ist ein Kettenrad bezeichnet, das mit der Kurbel 1 federnd gekuppelt ist. Mit 3 ist eine Feder bezeichnet, die mit einer anderen Feder 4 zusammenwirkt und mit dieser ein Federpaar bildet. Die Feder 3 weist einen Federschenkel 5 auf. Die Feder 4 weist einen Federschenkel 6 auf.

Mittels wenigstens eines Einspannorganes 7 der Kurbel 1 ist die Feder 3 eingespannt, wobei der Federschenkel 5 im wesentlichen quer zur relativen Schwenkbewegung weisend auskragt. Mittels wenigstens eines Einspannorganes 8 des Kettenrades 2 ist die Feder 4 eingespannt, wobei der Federschenkel 6 im wesentlichen quer zur relativen Schwenkbewegung weisend auskragt. Die Federschenkel 5 und 6 der ein Federpaar bildenden Federn 3 und 4 befinden sich beiderseits einer im wesentlichen radial verlaufenden Symmetrieachse 9.

Mit 10 ist die Schwenkachse bezeichnet, um die die relative Schwenkbewegung zwischen Kurbel 1 und Kettenrad 2, die miteinander federnd gekuppelt sind, vollführt wird.

Die Schwenkachse 10 liegt vorzugsweise in der Getriebeachse des Tretgetriebes.

Mit 11 ist eine gegebenenfalls zwischen den Federschenkel 5 und 6 der Federn 3 und 4 angeordnete Abstützbeilage bezeichnet.

Mit 12 ist eine Ausrichtebeilage bezeichnet.

Gemäß den Figurnen 1 und 4 weist die Getriebekupplung vier aus Federn 3 und 4 bestehende Federpaare auf.

Davon wirken jeweils zwei federnd vorgespannte Federpaare in entgegengesetzte Schwenkrichtungen.

Im Hinblick auf das dynamische Gleichgewicht des Getriebes ist vorzugsweise eine gerade Anzahl Federn 3 und 4 aufweisender Federpaare angeordnet, von denen jeweils zwei Federpaare an beiderseits der Schwenkachse 10 einander gegenüberliegenden Stellen spiegelverkehrt zueinander angeordnet sind.

Selbstverständlich können auch zusätzliche Maßnahmen zur Vermeidung einer Unwucht getroffen werden.

Grundsätzlich können auch nur zwei Federpaare angeordnet sein, die in entgegengesetzte Schwenkrichtungen wirkend federnd vorgespannt sind.

Gemäß den dargestellten Figuren bestehen die Federn 3 und 4 aus Stab-bzw. Bandmaterial bzw. aus geformten Stab-bzw. Bandmaterial. Beispielsweise ist gemäß Fig. 10 die Feder 3 aus einem Rundstab, gemäß Fig. 11 aus einem Quadratstab hergestellt. Gemäß den Figuren 19-21 sind die Federn 3 und 4 aus Bandstahl hergestellt.

Wie die Figuren 15 und 22 zeigen, können die Federn 3 bzw. 4 mehrschichtig sein. Bei aus mehreren Lagen relativ dünnen Federmaterials bestehenden Federn 3 und 4 erreicht man bei gleicher Länge der Federschenkel 5 und 6 einen größeren Federweg als bei einstückigen Federn mit gleicher Federkraft.

Wie die Figuren 4-6 und 18-21 zeigen, können die Federn 3 und 4 im wesentlichen bügel-, gegebenenfalls S-förmig ausgebildet sein. Diese Federn 3 und 4 sind vorzugsweise aus Stab-oder Bandmaterial geformt.

Wie die Figuren 4, 6, 18 and 19 zeigen, sind die im wesentlichen bügel-bzw. S-förmig ausgebildeten Federn 3 und 4 im Bereich der Bügel mittels der Einspannorgane 7 bzw. 8 eingespannt. Bei im Bereich der Bügel eingespannten bügelförmigen Federn 3 und 4 erreicht man relative lange, auskragende Federschenkel 5 und 6 und einen relative großen Federweg.

Die im wesentlichen bügelförmigen Federn 3 und 4 sind vorzugsweise mit nach außen gerichteten Bügeln angeordnet. Um das Kettenrad 2 und dessen Schwenklager möglichst geringen Kippkräften auszusetzen, sind die Federn 3 und 4 wenigstens annähernd in der Ebene des Kettenrades 2 angeordnet.

Wie die Figuren 14 und 15 zeigen, kann zwischen den Federschenkeln 5 und 6 der Federn 3 und 4 wenigstens eine Beilage 11 angeordnet sein. Die Beilage 11 kann zum Vorspannen der Federschenkel 5 und 6 eingesetzt werden.

Beim Ausführungsbeispiel gemäß Fig. 9 kann die Vorspannung dadurch hergestellt werden, daß die Federn 3 und 4 im Bereich ihrer Einspannbasis auseinander gekippt und mittels der Einspannorgane 7 und 8 fixiert werden.

Bei Ausführungsbeispiel gemäß Fig. 18 werden die Federn 3 und 4 mittels Exzenterstiften vorgespannt, die im Bereich der hinteren Enden der Bügel der Federn 3 und 4 angreifen.

Bei den Ausführungsbeispielen gemäß den Figuren 12, 15 und 19 wird die Vorspannung der Federn 3 und 4 mittels Schrauben hergestellt.

Die Vorspannung der Federn 3 und 4 kann auch dadurch hergestellt werden, daß sie in einem Bereich zwischen der Einspannbasis und ihren Enden mittels Widerlager in Richtung Symmetrieachse 9 gegeneinander gedrückt werden. Solche eingesetzte Widerlager können aus besonders hartem Material bestehen.

Die Vorspannung der Federn 3 und 4 kann auch dadurch bewirkt werden, daß seitlich verschwenkbar eingespannte Federn 3 und 4 von einer Position mit seitlich auskragenden Federschenkeln 5 und 6 gemeinsam in die Schwenkebene der Getriebekupplung geschwenkt werden.

Federn 3 und 4 wie sie gemäß Fig. 4 eingespannt sind, können gegebenenfalls durch Verdrehen der Einspannorgane 7 und 8 in der Schwenkebene vorgespannt und dann fixiert werden.

Damit die Federschenkel 5 und 6 zueinander ausgerichtet in der Schwenkebene gehalten sind, kann wenigstens eine Ausrichtebeilage 12 angeordnet sein, die mittels wenigstens eines Verbindungsschaftes, Verbindungssteges oder dgl. verbundene Abstützwände aufweist, zwischen denen sich die Federschenkel 5 und 6 wenigstens teilweise befinden.

Die Federschenkel 5 und 6 können auch durch vom Bereich der Einspannorgane 7 und/oder 8 auskragende Führungsgabeln, seitliche Führungsstifte, Führungswände oder dgl. in der Schwenkebene gehalten sein.

Vom Bereich der Einspannorgane 7 und 8 auskragende Führungsgabeln, seitliche Führungsstifte oder dgl. können einander übergreifen.

Die aus Stab-oder Bandmaterial bestehenden Federn 3 und 4 können Ausnehmungen und/oder Durchbrechungen aufweisen.

Gegebenenfalls weisen aus Stäben mit rundem oder quadratischem Querschnitt hergestellte Federn 3 und 4 Ausnehmungen zur Verankerung an den Einspannorganen 7 und 8 auf.

Aus geformtem Stab-oder Bandmaterial bestehende Federn 3 und 4 können Einspannanker in Form von Umbiegungen, Bügeln oder dgl. aufweisen, von deren Bereich die Federschenkel 5 und 6 ausgehen. Die Federn 3 und 4 sind im Bereich dieser Einspannanker mittels der Einspannorgane 7 und 8 eingespannt.

Die Federn 3 und 4 können auch Ausnehmungen für das Einrasten des Verbindungsschaftes einer Ausrichtebeilage 12 aufweisen. Die Federn 3 und 4 gemäß den Figuren 15, 19 und 20 bestehen aus Bandstahl bzw. sind aus Bandstahl geformt und weisen Lochungen für das Durchragen von Schrauben auf. Bei der Feder 3 gemäß Fig. 21 ist für das Durchragen einer Schraube ein Schlitz vorgesehen. Eine solche Feder 3 läßt sich montieren bzw. auswechseln, ohne daß die Schraube entfernt wird.

Selbstverständlich ist die Erfindung nicht auf die in den Zeichnungen dargestellten Ausführungsbeispiele beschränkt.

Eine Feder 3 bzw. 4 bzw. deren Federschenkel 5 bzw. 6 kann einen im wesentlichen runden Querschnitt mit wenigstens einer Abflachung aufweisen.

Vorzugsweise bildet diese Abflachung die Abstützfläche im Bereich der Federschenkel 5 und 6.

Die Federn 3 und 4 bzw. die Federschenkel 5 und 6 können auch einen anderen Querschnitt aufweisen.

Zur Differenzierung des Verlaufes der Energiespeicherung können die Federn 3 und 4 beispielsweise konisch geformt sein bzw. konische Schenkel 5 und 6 aufweisen.

Das Kettenrad 2 soll gegenüber der Kurbel 1 möglichst reibungsarm schwenkbar gelagert sein.

Zu diesem Zweck ist gemäß Fig. 7 eine Nadelkugellager ange ordnet. Gemäß Fig. 8 ist ein Rillenkugellager angeordnet.

Es kann aber beispielsweise auch ein Rollenkugellager angeordnet sein.

Das Kettenrad 2 kann gegenüber der Kurbel 1 auch mittels eines Gleitlagers schwenkbar gelagert sein.

Gemäß den dargestellten Figuren ist die Kurbel 1 mit einem Doppelkettenrad 2 federnd gekuppelt.

Die Kurbel 1 kann beispielsweise auch mit einem Einfachkettenrad oder mit einem Dreifachkettenrad federnd gekuppelt sein. Selbstverständlich kann das Kettenrad 2 bzw. die Kettenräder auch anders als in den Zeichnungen dargestellt ausgebildet sein. Beispielsweise können radiale Streben, die vom Schwenklager ausgehend den die Zähne aufweisenden Teil bzw. die Teile des Kettenrades 2 tragen, auch anders als in den Zeichnungen dargestellt, ausgebildet sein.

Vom Schwenklager können radiale Streben, Speichen oder dgl. ausgehen, die mittels wenigstens eines Ringes zusammengefaßt sind.

An diese radialen Streben oder dgl. kann der die Zähne aufweisende Teil bzw. die Teile des Kettenrades befestigt sein. Gemäß Fig. 1 sind zwischen vom Schwenklager ausgehenden radialen Streben bzw. Speichen jeweils zwei in entgegengesetzte Schwenkrichtungen wirkende, aus Federn 3 und 4 bestehende Federpaare angeordnet.

Gemäß Fig. 4 ist zwischen den vom Schwenklager ausgehenden radialen Streben jeweils ein aus Federn 3 und 4 bestehendes Federpaar angeordnet.

Gemäß den dargestellten Ausführungsbeispielen ist das Schwenklager im wesentlichen seitlich des Getriebelagers angeordnet. Das Schwenklager kann aber auch im Bereich des Getriebelagers angeordnet sein.

## Ansprüche

1. Tretkurbelgetriebe mit wenigstens einem gegenüber der Kurbel schwenkbar gelagerten, mit dieser federnd gekuppelten Kettenrad, dadurch gekennzeichnet, daß die Kupplung Federpaare aufweist, von denen eine Feder (3) mittels eines Einspannorganes (7) der Kurbel (1), die andere Feder (4) mittels eines Einspannorganes (8) des Kettenrades (2) eingespannt ist, die eingespannten Federn - (3) und (4) auskragende Federschenkel (5) und (6) aufweisen, die sich beiderseits einer radial verlaufenden Symmetrieachse (9) befinden und im wesentlichen quer zur relativen Schwenkbewegung weisend direkt oder mittels wenigstens einer gegebenenfalls dazwischengeschalteten Beilage (11) federnd aneinander abgestützt sind.

2. Tretkurbelgetriebe nach Anspruch 1, dadurch gekennzeichnet, daß die im wesentlichen gegeneinander gerichteten Abstützflächen der Federschenkel (5) und (6) voneinander und/oder von den Abstützflächen einer oder mehrerer gegebenenfalls dazwischengeschalteter Beilagen (11) von den Zonen der gegenseitigen Abstützung ausgehend in Richtung Einspannbasis der Federn (3) und (4) einen zunehmenden Abstand aufweisen.

3. Tretkurbelgetriebe nach Anspruch 1 oder 2, dadurch gekennzeichnet, daß Federn (3) und (4) angeordnet sind, die Federschenkel (5) und (6) aufweisen, die beiderseits einer durch die Schwenkachse (10) gehenden radialen Symmetrieachse - (9) spiegelverkehrt zueinander situiert sind.

4. Tretkurbelgetriebe nach einem der Ansprüche 1-3, dadurch gekennzeichnet, daß die Federn (3) und (4) mit im wesentlichen nach innen weisenden Federschenkeln (5) und (6) angeordnet sind.

5. Tretkurbelgetriebe nach einem der Ansprüche 1-4, dadurch gekennzeichnet, daß die Feder (3) bzw. (4) aus gegebenenfalls geformtem Stab-oder Bandmaterial besteht.

6. Tretkurbelgetriebe nach einem der Ansprüche 1-5, dadurch gekennzeichnet, daß die aus geformtem Stab-oder Bandmaterial bestehende Feder (3) bzw. (4) einen Einspannanker in Form einer oder mehrerer Umbiegungen aufweist, von dessen Bereich der Federschenkel (5) bzw. (6) ausgeht.

7. Tretkurbelgetriebe nach einem der Ansprüche 1-6, dadurch gekennzeichnet, daß die einen Einspannanker in Form wenigstens einer Umbiegung aufweisende Feder (3) bzw. (4) im Bereich des Einspannankers mittels eines Einspannorganes (7) bzw. (8) eingespannt ist.

8. Tretkurbelgetriebe nach einem der Ansprüche 1-7, dadurch gekennzeichnet, daß die aus Stab-oder Bandmaterial bestehende Feder (3) bzw. (4) im wesentlichen bügel-, S-förmig oder Z-förmig ausgebildet ist.

9. Tretkurbelgetriebe nach einem der Ansprüche 1-8, dadurch gekennzeichnet, daß die Feder (3) bzw. (4) mehrschichtig ausgebildet ist.

10. Tretkurbelgetriebe nach einem der Ansprüche 1-9, dadurch gekennzeichnet, daß wenigstens zwei federnd vorgespannte, in entgegengesetzte Schwenkrichtungen wirkende, aus Federn (3) und - (4) bestehende Federpaare angeorndet sind.

11. Tretkurbelgetriebe nach einem der Ansprüche 1-10, dadurch gekennzeichnet, daß eine gerade Anzahl Feder (3) und (4) aufweisender Federpaare angeordnet ist, von denen jeweils zwei Federpaare an beiderseits der Schwenkachse (10) einander gegegenüberliegenden Stellen vorzugsweise spiegelverkehrt zueinander angeordnet sind.

12. Tretkurbelgetriebe nach einem der Ansprüche 1-11, dadurch gekennzeichnet, daß wenigstens vier Federn (3) und (4) aufweisende Federpaare angeordnet sind, von denen jeweils zwei Federpaare an beiderseits der Schwenkachse (10) einander gegenüberliegenden Stellen vorzugsweise spiegelverkehrt zueinander angeordnet sind.

13. Tretkurbelgetriebe nach einem der Ansprüche 1-12, dadurch gekennzeichnet, daß zwischen den Federschenkel (5) und (6) der Federn (3) und (4) wenigstens eine Beilage (11) angeordnet ist.

14. Tretkurbelgetriebe nach einem der Ansprüche 1-13, dadurch gekennzeichnet, daß wenigstens eine Ausrichtebeilage (12) angeordnet ist, die mittels wenigstens eines Verbindungsschaftes, Verbindungssteges oder dgl. verbundene Abstützwände aufweist, zwischen denen sich die Federschenkel - (5) und (6) wenigstens teilweise befinden.

15. Tretkurbelgetriebe nach einem der Ansprüche 1-14, dadurch gekennzeichnet, daß die aus Stab-oder Bandmaterial bestehende Feder (3) bzw. (4) wenigstens eine Ausnehmung und/oder Durchbrechung aufweist.

16. Tretkurbelgetriebe nach einem der Ansprüche 1-15, dadurch gekennzeichnet, daß die Federn (3) und (4) wenigstens annähernd in der Ebene des Kettenrades (2) angeordnet sind.

FIG.1

FIG.3

FIG.2

0 203 054

FIG.4

FIG.5

FIG.6

FIG.7

FIG.8

0 203 054

0 203 054

FIG.11

FIG.10

FIG.13

FIG.9

FIG.12

FIG.18

FIG.14

FIG.19

FIG.15

FIG.20  FIG.21  FIG.22  FIG.17  FIG.16